# EUROPEAN PATENT SPECIFICATION

(11) **EP 0 928 810 B1**
(45) Date of publication and mention of the grant of the patent: **02.06.2004**
(21) Application number: 98310597.4
(22) Date of filing: 22.12.1998
(51) Int. Cl.: C08L 21/00, C08K 3/36, B60C 1/00, C08K 5/11

(54) **Rubber composition for a tyre tread**
Reifenlaufflächenzusammensetzung
Composition pour bande de roulement d'un pneumatique

(30) Priority: 24.12.1997 JP 35541297
(43) Date of publication of application: 14.07.1999
(73) Proprietor: Sumitomo Rubber Industries Ltd., Kobe-shi, Hyogo-ken (JP)
(72) Inventor: Komatsuki, Masato, Utsunomiya-shi, Tochigi-ken (JP); Tsumori, Isamu, Minami-tsukaguchi Park Hills 303, Amagasaki-shi, Hyogo-ken (JP); Kunisawa, Tetsuya, Akashi-shi, Hyogo-ken (JP)
(74) Representative: Manitz, Finsterwald & Partner

(56) References cited:
- EP-A- 0 748 841
- US-A- 5 679 744

## Description

The present invention relates to a rubber composition for a tyre tread.

Recently because of increasing social demand for reduction of fuel cost of cars, in the development of low fuel cost tyres which have decreased rolling resistance, it has been generally aimed to decrease the hysteresis loss of the rubber composition of the tread. To decrease the hysteresis loss, it is known that a reduction of the amount of carbon black in the rubber composition for treads and the use of silica as a filler are effective. `

However the smaller the amount of carbon black is, the higher the electrical resistance of the rubber composition and thus the electrical resistance of the tyre obtained by using such a rubber composition for the tread also becomes high and there is a problem that static electricity is accumulated on the car body and tyre, which causes radio noise and sparking at the time of filling fuel oil. Therefore for rubber compositions containing silica, in which the amount of carbon black is small, how the electrical resistance is decreased is important.

In the prior art, for example JP-A-60-223840, JP-A-61-66733, JP-A-6343937, JP-A-1-242644 and JP-A-7-292154, is disclosed a technique in which an adipic acid ester is added as a plasticiser to a rubber composition. However since only carbon black is used as a filler, a subject matter for decreasing electrical resistance is not found out and there is no disclosure and teaching with respect to the use of a diester of adipic acid for decreasing the electrical resistance.

Also in the prior art is EP 0 748 841 which discloses a rubber composition for a tyre tread in which a plasticiser is provided in the form of a diester of adipic acid. US 5 679 744 discloses ester plasticisers such as diesters of adipic acid but only with the objective of improving rubber strength, particularly tear strength, abrasion resistance, fatigue resistance and external damage resistance for tyres used on cold conditions. Neither of these prior art specifications makes any comment or teaching with respect to the use of a diester of adipic acid for decreasing electrical resistance.

It is an object of the present invention to provide a rubber composition for tyre treads which contains silica but also has a low electrical resistance. A further object of the present invention is to obtain a rubber composition for treads which contains silica and has well-balanced characteristics such as a low rolling resistance, good abrasion resistance and good wet performance.

The present inventors have discovered that the electrical resistance can be decreased effectively in the case where a specific diester of adipic acid is mixed to a rubber composition prepared by adding silica, and have completed the present invention.

Accordingly the present invention relates to a rubber composition for tyre treads as set out in claim 1. In the present invention, diene rubbers which have been used in the field of tyres may be used without any limitation.

Examples of the diene rubber are, for instance, natural rubber (NR), styrene-butadiene rubber (SBR), isoprene rubber (IR), ethylene propylene diene rubber (EPDM), isoprene-butadiene rubber (IBR), butadiene rubber (BR), acrylonitrile-butadiene rubber (NBR), chloroprene rubber (CR) and the like. These diene rubbers may be used alone or in optional combination thereof. Among them, the diene rubbers using NR, BR, SBR or IR are preferable from the point that they are general purpose rubbers for tyres.

In the present invention, silica which has been used in the field of tyres may be used without any limitation. An example of a preferred silica is, for instance, one which has a BET specific surface area of from 150 to 250m²/b and a DBP oil absorption amount of from 190 to 280 ml/100g from the viewpoints of the reinforcing effect in the rubber and the rubber processability.

Examples of such silica which is commercially available are, for instance, NIPSIL VN3 and NIPSIL AQ which are available from Nippon Silica Kabushiki Kaisha, Z1165MP and Z165Gr which are available from Rhône-Poulenc Co., Ultrasil VN3 available from Degussa Co., and the like.

The added amount of silica in the present invention may be from 40 to 90 parts by weight based on 100 parts by weight of the above-mentioned diene rubber, preferably from 60 to 90 parts by weight from the point of securing tyre wet performance.

In the present invention, a diester of adipic acid is added, which decreases the electrical resistance of the obtained rubber composition for tyre treads. It is considered that the existence of free electrons on the oxygen atom of an ester bond decreases the electrical resistance of the rubber composition for tyre treads.

Examples of such diester of adipic acid are, for instance, di(polyethylene glycol) adipate (a reaction product of adipic acid and polyethylene glycol) represented by the formula (1): HO- (CH₂-CH₂-O)ₘ-OOC- (CH₂) ; -COO- (O-CH₂CH₂) ₘ-OH, in which m is an integer of from 10 to 20, di(diethylene glycol monoalkyl ether) adipate (a reaction product of adipic acid and ether) represented by the formula (2) : CₙH₂ₙ₋₁-O-C₂H₄-O-C₂H₄-OOC- (CH₂) ₄-COO-C₂H₄-O-C₂H₄-O-CₙH₂ₙ₋₁, in which n is 1, 2 or 4, and the like, from the viewpoint of high electric conductivity, it is preferred to use a compound represented by the formula (1).

The added amount of the diester of adipic acid may be from 5 to 40 parts by weight based on 100 parts by weight of the above-mentioned diene rubber, preferably from 15 to 30 parts by weight from the point of balancing electrical resistance and abrasion resistance.

Also the diester of adipic acid used in the present invention can be prepared, for example, from polyethylene glycol and adipic acid by a usual method.

Further in the present invention, it is preferred to add a metal salt, particularly a perchloric acid salt of metal. This is because in the resultant rubber composition, a metal ion forms a network with an oxygen atom in the molecule of the diester of adipic acid to cause an ion conductivity and thus the electrical resistance of the resultant rubber composition for tyre treads can be decreased.

Such a metal salt may be any of those which can provide a metal ion in the rubber composition of the present invention. Examples thereof are, for instance, perchloric acid salts such as LiC10₄, KC10₄, NaC10₄ and Mg(C10₄)₂, and particularly a lithium salt is preferred. Among them, LiC10₄ is preferred from the points of being free from risk of an explosion and being safe and enhancing abrasion resistance of the tyre tread.

The added amount of the metal salt may be from 1 to 5 parts by weight based on 100 parts by weight of the above-mentioned diester of adipic acid, preferably from 3 to 5 parts by weight from the viewpoint of high electric conductivity.

Further in the present invention, it is preferred to add a silane coupling agent. This is because the addition of the silane coupling agent results in chemical bonding of the above-mentioned diester of adipic acid and a diene rubber through the silane coupling agent, and the rolling resistance can be further reduced and wet performance can be enhanced to reduce dependency of hardness on temperature.

Silane coupling agents which have been used in the field of tyres may be used without any limitation. Example of the preferred silane coupling agent are, for instance, vinyltrimethoxysilane, vinyltriethoxysilane, N-(2-aminoethyl)-3-aminopropylmethyldimethyoxysilane, 3-aminopropyltriethoxysilane, 3-glycidoxypropylmethyldimethoxysilane, and the like.

The added amount of the silane coupling agent may be the minimum one which is necessary for reducing rolling resistance and enhancing wet performance, and can be optionally selected by a person skilled in the art.

In addition to the above-mentioned components, if necessary, to the rubber composition of the present invention can be added optionally a filler such as talc, clay or carbon black; a softening agent such as a paraffinic, aromatic of naphthenic process oil; a tackifier such as a cumarone-indene resin, rosine resin or cyclopentadiene resin; a vulcanising agent such as sulfur or peroxide; a vulcanisation accelerator; an activator aid such as a stearic acid or zinc oxide; a rubber antioxidant; and the like, in a range not impairing effects of the present invention.

The method for preparing the rubber composition for treads of the present invention is explained below.

The rubber composition for tyre treads of the present invention can be obtained by kneading the above-mentioned components for a time using a usual method. It is, however, preferable from the point of adhering the diester acid to the silica surface, that the diester of adipic acid is previously kneaded with silica to carry the diester of adipic acid physically or chemically on the silica surface, and this mixture is then kneaded with other components.

In the case of adding the metal salt, it is preferable from the point of forming a network having ion-conductivity that the metal salt is previously kneaded with the diester of adipic acid.

The present invention is explained in more detail by means of the following Examples, but is not limited to them.

At first each component used in the Examples is shown in Table 1.

**TABLE 1**

| Component Used | Adding amount (parts by weight) |
|---|---|
| Natural rubber | 50 |
| | |
| Diene rubber | |
| SBR 1500 available from Sumitomo Chemical Industries Co Ltd (styrene-butadiene rubber) | 75 |
| Silica | |
| Ultrasil VN3 available from Degussa Co | |
| | |
| Diester of adipic acid | Variable |
| A US-600 available from Sanken kako Co (di(polyethylene glycol) adipate- m=14 | |
| B US-70 available from Sanken kako Co (di(diethylene glycol monoalkyl ether) adipate, n=4 | |
| | |
| Lithium salt | |
| Lithium perchlorate (LiC10₄) | Variable |
| | |
| Silane coupling agent | 6 |
| Si69 available from Degussa Co (bis(3-triethoxsilypropyl)tetrasulfene) | |
| | |
| Carbon black | 15 |
| N330 available from Showa Cabbot Co | |
| | |
| Process oil | 20 |
| Dyana Process PS32 available from Idemitsu Kosan Kabushiki kaisha | |
| | |
| Wax | 2 |
| Sannoc wax available from Ohuchi Shinko Kaguku Kogyo Kabushiki Kaisha | |
| | |
| Rubber antioxidant | 2 |
| Santoflex 13 available from Flexsys Co ((N-1,3-dimethylbutyl)-N'-phenyl-p-phenylenediamine | |
| | |
| Stearic acid | |
| KIRI available from NOF Corporation | 2 |
| | |
| Zinc white | 2 |
| Zinc Oxide No 2 available from Mitsui Kinzoku Kogyo Kabushiki Kaisha | |
| | |
| Sulfur | 1.5 |
| Sulfur available from Kabushiki Kaisha Karuizawa Seirensho | |
| | |
| Vulcanisation accelerator | |
| A Nocceler NS available from Ohuchi Shinko Kagaku Kogyo Kabushiki Kaisha | 2 |
| B Soxinol D available from Sumitomo Chemical Industries Co Ltd (diphenyl guanidine | 1 |

### EXAMPLES 1 TO 3

All the components except sulfur and vulcanisation accelerator were kneaded at about 150°C for four minutes using a 1.7 litre Banbury mixer made by Kobe Steel Ltd., according to the mixing amounts shown in Tables 1 and 2 to give a kneaded product. To the resultant kneaded product were added 1.5 parts by weight of sulfur and 3.0 parts by weight of a vulcanisation accelerator, followed by further kneading at 80°C for about four minutes by a twin-roller and vulcanising at 170°C for ten minutes to give rubber compositions 1 to 3 for tyre treads of the present invention.

With respect to the resultant vulcanised rubber compositions tests were made according to the following methods. The results are shown in Table 2.

### Test Methods

(1) Volume specific resistance (logδV): A sample of 15 cm x 15 cm x 2 mm was made from the vulcanised rubber composition for tyre treads, and the volume specific resistance was measured by using an electric resistance meter ADVANTESTER 8340A available from Advantest Co under the conditions of an applied voltage of 1000 V, a temperature of 25°C and a humidity of 50%. The volume specific resistance is preferably less than 11.
(2) Rolling resistance: A tyre of 175/70R13 having a tread made from the rubber composition was produced and the rolling resistance was measured by running it at a load of 345 kg, an inside pressure of 200 kPa and a speed of 80 km/h using a tester made by Kobe Kikai Kabushiki Kaisha. The rolling resistance was evaluated as an index assuming that the index in case of Comparative Example 1 described hereinafter was 100. The larger the index is, the lower the rolling resistance.
(3) Abrasion resistance: Tyres of 175/70R13 having treads made from the rubber composition were produced and mounted on a car. After running the car 30,000 km on an ordinary road and expressway, the depth of the remaining grooves of the tread were measured to evaluate abrasion resistance by an index obtained assuming that the index in case of Comparative Example 1 described hereinafter was 100. The larger the index is, the more excellent the abrasion resistance.
(4) Wet performance: The car used in the test (3) was circled round on a test course on a tiled surface of low µ with water scattered all over the course. The maximum speed at the time when the tyre slipped was measured to evaluate wet performance by an index obtained assuming that the index of Comparative Example 1 was 100. The larger the index is, the more excellent the wet performance.
(5) Electrical resistance of tyre: by using the tyres used in the test (3), the resistance between the centre part of a rim and a conductive plate contacting the tyre tread was measured with a megohmmeter under the conditions of an inside pressure of 200 kPa, a load of 2.94 kN, an applied voltage of 1000 V, a temperature of 25°C and a humidity of 50%. It is preferred that the electrical resistance is less than 9.

### EXAMPLES 4 AND 5

The same procedures as in Example 1 were conducted according to mixing amounts shown in Tables 1 and 2 except that a lithium salt was previously mixed to the diester of adipic acid. Thus the vulcanised rubber compositions 4 and 5 for treads of the present invention were obtained, and tests were carried out. The results are shown in Table 2.

### EXAMPLE 6

The same procedures as in Example 1 were conducted according to mixing amounts shown in Tables 1 and 2 except that silica and diester of adipic acid were previously mixed. Thus the vulcanised rubber composition 6 for tyre treads of the present invention was obtained, and tests were carried out. The results are shown in Table 2.

### COMPARATIVE EXAMPLES 1 TO 3

Rubber compositions 1 to 3 for comparison were prepared in the same manner as in Example 1 except that the mixing amounts were changed to those shown in Table 2. The same tests as in Example 1 ere carried out. The results are shown in Table 2.

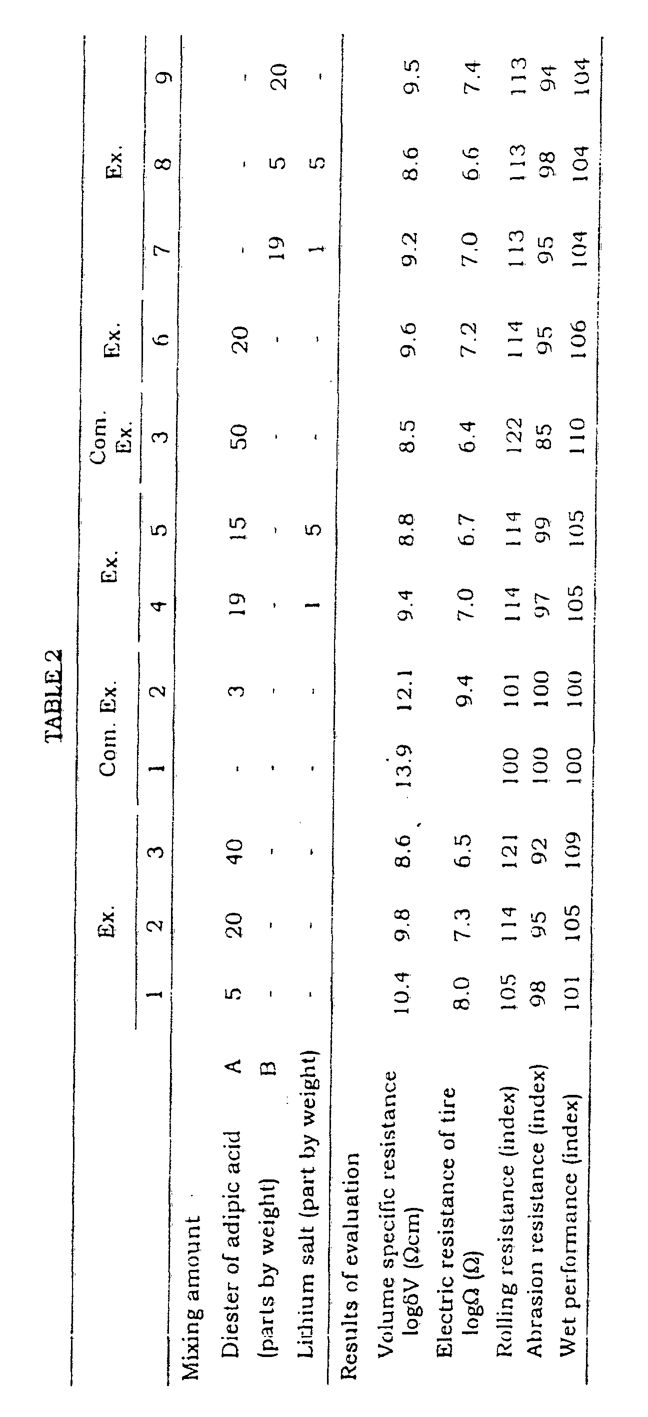

### EXAMPLES 7 AND 8

Vulcanised rubber compositions 7 and 8 for tyre treads of the present invention were prepared in the same manner as in Examples 4 and 5 except that kind of the diester of adipic acid was changed, and tests were carried out. The results are shown in Table 2.

### EXAMPLE 9

Vulcanised rubber composition 9 for tyre treads of the present invention was prepared in the same manner as in Example 6 except that kind of the diester of adipic acid was changed, and tests were carried out. The results are shown in Table 2.

From the results of evaluations of Example 1 and Comparative Examples 1 and 2, it is seen that when the added amount of the diester of adipic acid is less than 5 parts by weight, the electrical resistance is not reduced.

From the results of evaluations of Example 3 and Comparative Example 3, it is seen that when the added amount of the diester adipic acid exceeds 40 parts by weight, abrasion resistance is lowered.

According to the present invention, a rubber composition for tyre treads which contains silica which has a low electrical resistance is obtained, and further the rubber composition for treads which contains silica and has well-balanced characteristics such as a low rolling resistance, good abrasion resistance and good wet performance.

## Claims

1. A rubber composition for a tyre tread **characterised by** 40 to 90 parts by weight of silica and 5 to 40 parts by weight of a diester of adipic acid based on 100 parts by weight of a diene rubber and prepared by adding 1 to 5 parts by weight of a metal salt based on 100 parts by weight of the diester of adipic acid.

2. The rubber composition of claim 1, **characterised in that** the amount of metal salt is 3 to 5 parts.

3. The rubber composition of claim 1 or 2, **characterised in that** the metal salt is a perchloric acid metal.

4. The rubber composition of claim 3, **characterised in that** the metal salt is one of LiCl0₄, KCl0₄, NaCl0₄ or Mg(Cl0₄)₂.

5. The rubber composition of claims 1 to 4, **characterised by** the addition of a silane coupling agent.

## Patentansprüche

1. Kautschukmischung für einen Reifenlaufstreifen, **gekennzeichnet durch** 40 bis 90 Gewichtsteile Silica und 5 bis 40 Gewichtsteile eines Diesters von Adipinsäure auf der Basis von 100 Gewichtsteilen eines Dienkautschuks und zubereitet, indem 1 bis 5 Gewichtsteile eines Metallsalzes auf der Basis von 100 Gewichtsteilen des Diesters von Adipinsäure hinzugefügt werden.

2. Kautschukmischung nach Anspruch 1, **dadurch gekennzeichnet, dass** die Metallsalzmenge 3 bis 5 Teile beträgt.

3. Kautschukmischung nach Anspruch 1 oder 2, **dadurch gekennzeichnet, dass** das Metallsalz eines der Perchlorsäure ist.

4. Kautschukmischung nach Anspruch 3, **dadurch gekennzeichnet, dass** das Metallsalz eines von LiClO₄, KClO₄, NaClO₄ oder Mg (ClO₄)₂ ist.

5. Kautschukmischung nach den Ansprüchen 1 bis 4, **gekennzeichnet durch** den Zusatz eines Silanhaftvermittlers.

## Revendications

1. Composition de caoutchouc pour bande de roulement de pneumatique, **caractérisée par** 40 à 90 parties en poids de silice et 5 à 40 parties en poids d'un diester de l'acide adipique, pour 100 parties en poids d'un caoutchouc de diène, préparée par addition de 1 à 5 parties en poids d'un sel métallique pour 100 parties en poids du diester de l'acide adipique.

2. Composition de caoutchouc selon la revendication 1, **caractérisée en ce que** la quantité de sel métallique est comprise entre 3 et 5 parties.

3. Composition de caoutchouc selon la revendication 1 ou 2, **caractérisée en ce que** le sel métallique est un sel d'un métal et d'acide perchlorique.

4. Composition de caoutchouc selon la revendication 3, **caractérisée en ce que** le sel métallique est un sel choisi parmi LiClO₄, KClO₄, NaClO₄ et Mg(ClO₄)₂ .

5. Composition de caoutchouc selon les revendications 1 à 4, **caractérisée par** l'addition d'un agent d'accrochage de silane.
